# EUROPEAN PATENT APPLICATION

(11) **EP 1 868 299 A2**
(43) Date of publication of application: **19.12.2007**
(21) Application number: 07011606.6
(22) Date of filing: 13.06.2007
(51) Int. Cl.: H04B 3/54, H04B 3/56

(54) **Power line communication terminal apparatus**

(30) Priority: 14.06.2006 JP 2006164788
(71) Applicant: MATSUSHITA ELECTRIC INDUSTRIAL CO., LTD., Osaka 571-8501 (JP)
(72) Inventor: Hoshi, Kenichi c/o Matsushita Electric Industrial Co. Ltd. Intellectual Property Rights Operations Company, Osaka 540-6319 (JP)
(74) Representative: Urner, Peter

(57) **Abstract**

A power line communication terminal apparatus disposed between a network device and a power line forming a power line network, comprises a disconnection detector detecting a disconnection state with the network device; and a state transition controller switching the internal circuits to a dormant state (energy saving mode), or to the power-off state when the result of the disconnection detector shows a disconnection state, thereby reduces power consumption and maintains high communication efficiency of the power line communication system.

## Description

### FIELD OF THE INVENTION

The present invention relates to terminal apparatuses used for power line communication (PLC) . More particularly, the present invention pertains to a technology for reducing power consumption and improving communication efficiency of the PLC terminal apparatuses.

The PLC terminal apparatus of the present invention is useful, for example, as a PLC wiring accessory, a PLC distributor device, a communication network system, which enables supply of power and transmission/reception of PLC signals through interior power lines (power source lines, power feeding lines) of general offices, residential houses and the like.

### BACKGROUND OF THE INVENTION

Information is exchanged between PLC terminal apparatuses and other apparatuses connected thereto, such as network devices and household appliances when communications occur, but there is virtually no dependence among them when there is no communication. However, the PLC terminal apparatuses remain connected to a PLC network, even when there is no communication between the PLC terminal apparatuses and other apparatuses such as the network devices and household appliances.

When receiving information, a PLC terminal apparatus needs to carry out a process called Carrier sense to determine whether other devices are in the middle of transmitting or receiving information. The carrier sense process must be kept running even when nothing is being transmitted or received, so that the PLC terminal apparatus is capable of communication anytime. This means that power continues to be consumed in a carrier sense circuit as long as the PLC terminal apparatus stays on.

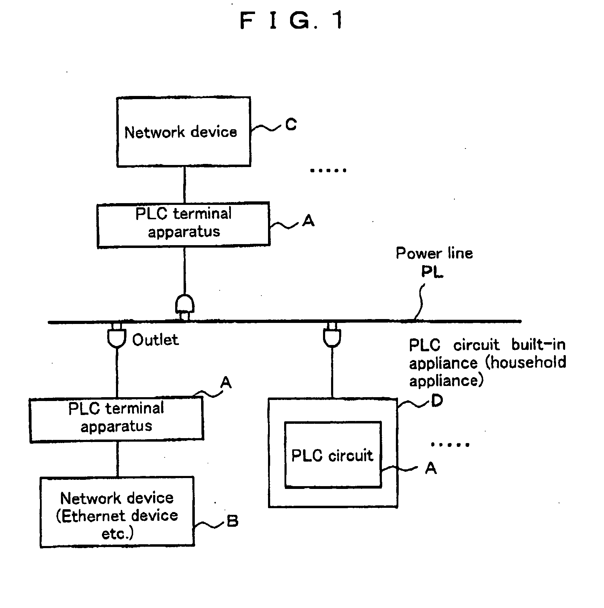

There are disclosed technologies for reducing such power consumption, wherein on a PLC network, comprising a server and several terminals, communications are conducted between terminals through the server all the time (e.g., refer to Japanese Patent Laid-Open Publication 2005-072970A, pages 5 to 10 and Figs. 1 to 5) . More particularly, one terminal changes its operating state based on the presence or absence of outgoing transmission request to other terminals. When the transmission destination terminal is dormant, the information to be communicated is saved temporarily in the server. Thus the power consumption is reduced in the system.

However, the transmission efficiency declines in the conventional technologies as disclosed in Japanese Patent Laid-Open Publication 2005-072970A, because the system consists of a server and terminals and all the communication is transmitted through the server. In addition, this technology is intended to reduce power consumption during the PLC operation, and repeats a step of making the terminal the presence or absence or us outgoing transmission request and of launching the terminal apparatus by a timer after the elapse of a predetermined time.

It should be noted that PLC, by its own nature, does not necessarily occurs even when PLC terminal apparatuses stays on. In other words, the ON/OFF states of the PLC terminal apparatuses does not necessarily match with those of the other apparatuses such as network devices and household appliances, which are to make transmission requests to the PLC terminal apparatuses. For example, in the case of a personal computer (PC) connected to a PLC terminal apparatus (such as a PLC adaptor and PLC modem) via an Ethernet™, there may be a considerable amount of time during which the PC stays off, while the PLC terminal apparatus stays on. Power is wasted during this time period, because the internal circuits of the PLC terminal apparatus remain in operation even when no transmission/reception is required at all.

Furthermore, even when no transmission/reception operation from PLC terminal apparatuses occurs due to the power-off position of apparatuses such as network device and household appliance connected to the PLC terminal apparatuses, the band for the PLC remains reserved in the PLC communication path (especially in the case of band-reservation type communication), causing the communication efficiency to decline even further.

### SUMMARY OF THE INVENTION

It is therefore the main object of the present invention to simultaneously realize electric power saving and improvement in communication efficiency of PLC systems.

In a first aspect, a PLC terminal apparatus of the present invention is disposed between a network device and a power line forming a PLC network, and comprises a disconnection detector detecting disconnection with the network device; and a state transition controller transitting internal circuits to a dormant state (energy saving mode), or to the power-off state, when the disconnection detector detects a disconnection state.

In this constitution, the disconnection detector detects if the network device, which may be connected to the PLC terminal apparatus, is in an effective connection state or not, and transmits the detection result to the state transition controller. The state transition controller switches the internal circuits of the PLC apparatus into a dormant state (sleep mode), or to the power-off state, if the detection result shows a disconnection state. In other words, the network device does not transmit or receive data via the PLC network through the PLC terminal apparatus, when the network device is in a disconnection state. Therefore, the power consumed by the PLC terminal apparatus is reduced by switching the PLC terminal apparatus into a dormant state or the power-off state.

The detection of a disconnection state is accomplished, for example, by checking the physical connection of the cable connecting the PLC terminal apparatus and the network device, or by checking the existence of a response to the packet transmitted from the PLC terminal apparatus to network devices.

The transitting to a dormant state is accomplished, for example, by controlling supplies of a clock and other signals to the internal circuits. And the transitting to the power-off state is accomplished, for example, by shutting off power to the internal circuits.

More specifically, power consumption is reduced by switching the internal circuits of the PLC terminal apparatus to a dormant state, or to the power-off state, in such cases when the cable connecting to the network device is disengaged, the power of the network device is off, or the network device becomes communication-incapable with the PLC terminal apparatus.

In the above described constitution, the disconnection detector is configured to detect the disconnection state by a transition, or by a sensor installed in a connector portion with a connection cable of the network device.

When there is no need for the network device to transmit or receive data via the PLC network, the network device may be physically separated from the PLC terminal apparatus, for example, by manually pulling out the cable. In such cases, the switch or the sensor installed in the connector portion is activated. Consequently, the disconnection detector generates a disconnection detection signal and transmits the signal to the state transition controller. As a result, the PLC terminal apparatus turns into an energy saving mode automatically without a user paying any special attention.

In the above described constitution, the state transition controller is configured to transit the internal circuit to a dormant state (energy saving mode) temporarily and subsequently switches the internal circuits from the dormant state to the power-off state after the elapse of a predetermined time when a detection result of the disconnection detector shows a disconnection state.

In a second aspect, a PLC terminal apparatus of the present invention is disposed between a network device and a power line forming a PLC network, and comprises a disconnection detector detecting a disconnection state with the network device; and a notification controller notifying the disconnection state with the power line communication network to other power line communication devices connected to the PLC network when a detection result of the disconnection detector shows a disconnection state.

The disconnection detector detects if the network device, which may be connected to the PLC terminal apparatus , is in a an effective connection state or not. If the detection result shows a disconnection state, the notification controller notifies the other PLC apparatuses of the disconnection state with the network device via the PLC network. The other PLC apparatuses receiving the notification remove the band reservation and carry out other processes to take some of the load off the PLC network, so that the communication efficiency of the PLC network improves.

The above described constitution may further comprise a state transition controller which switches internal circuits to a dormant state (energy saving mode) or to the power-off state after completion of the notification of the disconnection state by the notification controller.

The notification controller notifies the disconnection state with the network device to other PLC apparatuses via the PLC network prior to a state transition controller transitting internal circuits to a dormant state (energy saving mode) or to the power-off state. The other PLC apparatuses receiving the notification remove the band reservation and carry out other processes to take some of the load off the PLC network, so that the communication efficiency of the PLC network improves. The power consumed by the PLC terminal apparatus is reduced by switching the PLC terminal apparatus into a dormant state or the power-off state.

Further more, in the above described constitution, the state transition controller is configured to transit the internal circuit to a dormant state (energy saving mode) or to the power-off state, after the notification controller completes the notification of the disconnection state and after a predetermined time elapses when a detection result of the disconnection detector shows a disconnection state.

The transitting of the internal circuits to the dormant state or to the power off state may occur the moment when the notification of the disconnection state is made after the elapse of a predetermined time subsequent to the notification. In the latter case, the transitting to the dormant state or to the power off state does not occur, when the relation between power line communication terminals and network devices is changed from a connection state to the disconnection state in a comparatively early stage after the notification. Therefore, this arrangement allows higher process efficiency than the arrangement in which the apparatus is transitted to a dormant or turn-off state concurrently with the notification.

In a third aspect, a PLC terminal apparatus of the present invention is disposed between a network device and a power line forming a PLC network, and comprises a notification controller which goes into action in response to the turn-off operation of a power switch and notifies other PLC apparatuses connected to the PLC network of the disconnection state with the network device.

This is a technology which provides information to other PLC devices in the case when the power switch is tuned off to stop operation of the PLC terminal apparatus itself, rather than detecting a disconnection state between the PLC terminal apparatus and the network device.

The PLC terminal apparatus includes a power switch to turn itself on and off. A notification that the PLC terminal apparatus is excluded from the PLC network is transmitted to other PLC apparatuses connected to the PLC network, when the PLC terminal apparatus is turned off by the operation of the power switch. This arrangement enables a band to be removed from the allocation in the PLC network automatically in a power-off state, without taking a trouble to carry out processes of making the band within the PLC network open, when a user wants to turn off the PLC terminal apparatus intentionally. Thus, no disturbance is caused in communication among the other PLC apparatuses remaining on the PLC network and therefore the band is utilized more efficiently. In addition, the arrangement which enables a manual restoration can reduce inconveniences associated with the operation of forced switching to a dormant state or to the power-off state.

Incidentally, the switch for turning power on and off includes, for example, a reset switch, or any of other switches installed for other functional purposes.

In a fourth aspect, a PLC terminal apparatus of the present invention is disposed between a network device and a power line forming a PLC network, and comprises a power cord plug which is electrically connected to, or disconnected from, the power line by a physical contact or separation, wherein the power cord plug comprises switch which conduct an ON/OFF switching before the completion of the physical contact/separation and is configured to detecte the disconnection from the PLC network in advance by operation of the switch at the time of separation operation of the power cord plug from the power line and generate and output a disconnection prior-detection signal; and a notification controller which notifies other network devices connected to the PLC network of the disconnection state with the PLC network based on the input of the disconnection prior-detection signal of the switch.

This is a technology which provides other PLC apparatuses with the information in the case when the power cord plug is pulled out to stop operation of the PLC terminal apparatus itself, rather than detecting a disconnection state between the PLC terminal apparatus and the network device.

When unplugging the power cord of the PLC terminal apparatus, the switch installed on the power cord plug is activated immediately before the unplugging is completed. Then, the disconnection detector detects the disconnection from the PLC network prior to the completion of the disconnection and generates and outputs the disconnection prior-detection signal. Consequently, the notification controller notifies other PLC devices connected to the network of the disconnection from the PLC. The switch installed on the power cord plug is activated without a user' s knowing in a flow of operation of pulling out the plug and makes the notification of its being excluded from the PLC network right before the completion of the unplugging operation, whereby increasing the utilization of the band in the PLC network.

In a fifth aspect, a PLC terminal apparatus of the present invention is disposed between a network device and a power line forming a PLC network, and comprises a no-connection state detector which detects a no-connection state of another communication-capable PLC device on the PLC network, or communication-incapable state of another connected PLC device; and a state transition controller which switches internal circuits into a dormant state (energy saving mode), or to the power-off state, after a predetermined time has passed when a detection result by the no-connection state detector shows a no-connection state.

This pertains to energy saving in the cases-when there is only one PLC terminal connected to the PLC network. When the no-connection state detector detects a no-communication state in which no other communication-capable PLC devices, except the PLC terminal, exist on the PLC network, the state transition controller switches the internal circuit into a dormant or the power off state and independently turns the PLC terminal apparatus into a dormant or the power off state. More specifically, in the PLC network, all the other PLC devices except for the PLC terminal apparatus are in a dormant or in the power off states. If communication-incapable state is detected, the PLC terminal apparatus turns itself into a dormant or the power-off state, whereby the power consumption is reduced.

In the above constitution, the state transition controller may transit the internal circuits back to a normal operation after the elapse of a predetermined time subsequently to turning them to a dormant or the power-off state; the no-connection state detector may detect the communication status on the PLC network when the state transition controller switches the internal circuits back to a normal operation; and the state transition controller may continue normal operation when data is being communicated on the PLC network, and may transit to a dormant or the power-off state when no data is being communicated on the PLC network.

When the internal circuits are switched to a dormant or the power-off state based on the detection of a no communication state, other PLC devices may thereafter turn into a communication state. In that case, if the PLC terminal apparatus permanently stays in an energy saving mode, no power line communication shall be established with other devices. Because of this, when the internal circuits are switched to a dormant or the power-off state based on the detection of a no-communication state, the internal circuits are launched at intervals of a predetermined time to check the communication status on the PLC network. The internal circuits are turned back to a dormant or the power-off state again if there is no communication, and stays in the normal operation if there is communication. This approach reduces power consumption while maintaining user-friendliness, since detection is made possible even when PLC apparatuses other than the PLC apparatus are connected.

The above constitution includes a means for restoring internal circuits to a normal operation from a dormant or the power-off state by detecting a connection with the network device and independently controlling supplies of power and/or clock to each circuit or controlling the control signals of the power supply and/or clock.

Although the above explanations are based on a PLC apparatus disposed between a network device and a power line forming a PLC network, the present invention is not limited to such an apparatus, but also includes PLC circuits built into devices such as household appliances.

In a sixth aspect, a PLC circuit of the present invention is built into a household appliance forming a PLC network by connecting itself with a power line, comprising, a detection circuit detecting the switching of other circuits in the household appliance from a normal operation to a dormant or a power-off state; and a notification control circuit notifying other PLC devices connected to the PLC network of a disconnection state with the PLC network when the detection circuit has detected the switching of the other circuits from a normal operation to a dormant or a power-off state.

The detection circuit detects whether or not a PLC terminal apparatus such as a household appliance, in which the PLC circuit is built-in, was switched from a normal operation state to an energy saving mode, or to the power-off state. The notification control circuit notifies other PLC devices of the disconnection state with the PLC network via the PLC network when the switching is detected. The other PLC apparatuses receiving the notification remove the band reservation and carry out other processes to take some of the load off the PLC network, whereby the communication efficiency of the PLC network improves. In addition, the devices having the PLC circuit built-in do not require any network interface and thus are lower in manufacturing costs.

The above constitution may further comprise a state control circuit which switches the state to a dormant state (energy saving mode), or to the power-off state by controlling the power supply or clock supply to the other circuits or by controlling the clock control signals after the notification circuit notifies the disconnection state with the PLC network and a predetermined time has passed.

The transitting of the PLC circuit of a device, such as a household appliance, to the dormant state or to the power off state may occur concurrently with the notification of the disconnection state. Alternatively, the transitting to the dormant state or to the power off state may occur after the elapse of a predetermined time. The latter arrangement allows a higher process efficiency than the arrangement in which the state is transitted to a dormant or turn-off state concurrently with the notification, because the transitting to the dormant state, or to the power off state, does not occur when the PLC terminal apparatus, including a household appliance, is transitted to a normal operation state in a comparatively early stage after the notification.

The above described constitution includes a means for switching to a normal operation state from the dormant state (energy saving mode), or from the power-off state by independently controlling supplies of power and/or clock to each circuit of the PLC circuit, or controlling control signals of power supply and/or clock when the detection circuit detects the switching to power-ON state of the other circuits internal to the household appliance.

### BRIEF DESCRIPTION OF THE DRAWINGS

The present invention is illustrated by way of example and is not limited to those in the figures of the accompanying drawings, in which like references indicate similar elements and in which:
Fig. 1 is a schematic configuration diagram of the power line communication network of a preferred embodiment of the present invention.
Fig.2 is a block diagram showing the configuration of a PLC terminal apparatus in a first preferred embodiment of the present invention.
Fig.3 shows an example of detection method of a disconnection state in a cable connector in the first preferred embodiment of the present invention.
Fig.4 shows another example of detection method of a disconnection state in a cable connector in the first preferred embodiment of the present invention.
Fig. 5 shows yet another example of a detection method of a disconnection state in a cable connector in the first preferred embodiment of the present invention.
Fig.6 is a state transition diagram showing the operation of the PLC terminal apparatus in the first preferred embodiment of the present invention.
Fig.7 is another state transition diagram showing the operation of the PLC terminal apparatus in the first preferred embodiment of the present invention.
Fig.8 is a block diagram showing the configuration of the PLC terminal apparatus in a second preferred embodiment of the present invention.
Fig. 9 is a state transition diagram of the operation of the PLC terminal apparatus in the second preferred embodiment of the present invention.
Fig.10 is a block diagram showing the configuration of the PLC circuit built-in device, including household appliances.
Fig.11 is a state transition diagram showing the operation of the PLC circuit in a third preferred embodiment of the present invention.
Fig. 12 is an explanatory diagram showing an example of a power plug used in a fourth preferred embodiment of the present invention.
Fig. 13 is an explanatory diagram showing another example of a power plug used in the fourth preferred embodiment of the present invention.
Fig.14 is an explanatory diagram showing yet another example of a power plug used in the fourth preferred embodiment of the present invention.
Fig. 15 is a state transition diagram showing the operation of the PLC terminal apparatus in the fourth preferred embodiment of the present invention.
Fig.16 is a state transition diagram showing the operation of the PLC terminal apparatus in a fifth preferred embodiment of the present invention.
Fig.17 is another state transition diagram showing the operation of the PLC terminal apparatus in the fifth preferred embodiment of the present invention.

### DETAILED DESCRIPTION OF THE INVENTION

Preferred embodiments will be described hereinafter with reference to drawings attached hereto.

### (First preferred embodiments)

Fig.1 is a schematic configuration diagram of a general power line communication network. A PLC terminal apparatus A is disposed between a network device B such as an Ethernet device and a power line, another PLC terminal apparatus A is disposed between a network device C other than the Ethernet device and the power line, and a PLC circuit A is built into a device D such as a household appliance which is connected directly to the power line. The device D is hereinafter called the PLC circuit built-in device.

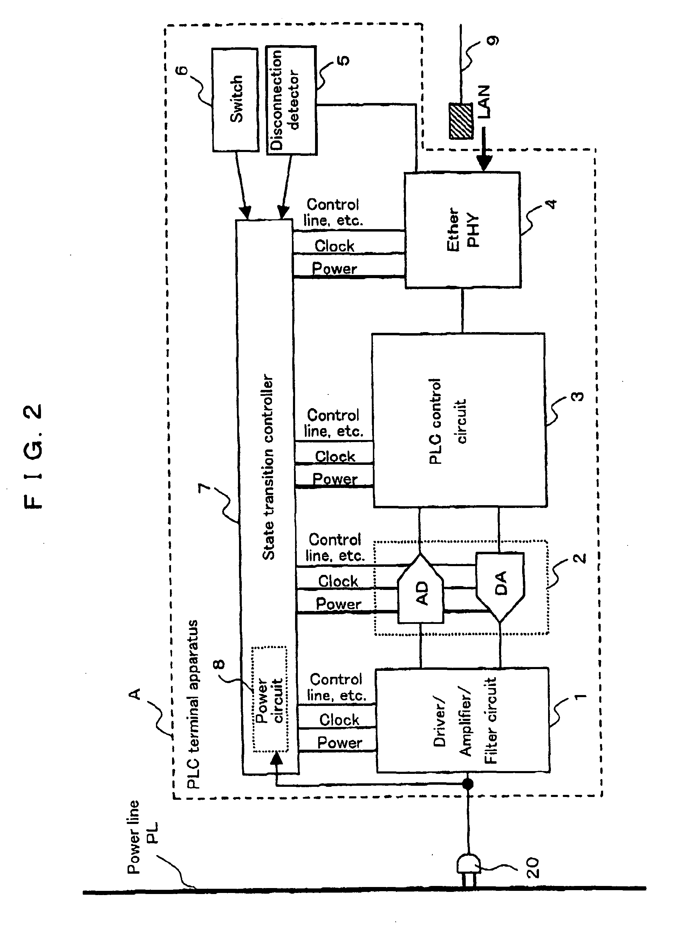

Fig. 2 is a block diagram showing the configuration of the PLC terminal apparatus A in a first preferred embodiment of the present invention. The PLC terminal apparatus A has a main PLC function circuit, which transmits signals to a power line PL and receives signals from the power line PL, comprising a driver/amplifier/filter circuit 1, a AD/DA converter 2, a PLC control circuit 3 and an EtherPHY 4; and also includes a disconnection detector 5; a switch 6; and a state transition controller 7. A power supply circuit 8 receives power from the power line. The power circuit 8 supplies power to the driver/amplifier/filter circuit 1, the AD/DA converter 2, the PLC control circuit 3 and the EtherPHY 4. The driver/amplifier/filter circuit 1, the AD/DA converter 2, the PLC control circuit 3 and the EtherPHY 4 are time-controlled by the clock and control signals from the state transition controller 7. Incidentally, reference numeral 20 is a power plug.

The driver/amplifier/filter circuit 1 filters out noise from the signals received from the power line PL, transmits the processed signals to the AD converter portion of the AD/DA converter 2 and then receives signals from the DA converter portion of the AD/DA converter 2 to transmit the signals out to the power line PL.

The AD/DA converter 2 converts the analog signal received from the driver/amplifier/filter circuit 1 into a digital signal, transmits the digital signal to the PLC controller 3. The AD/DA converter 2 also converts the digital signal received from the PLC controller 3 into an analog signal and transmits the signal to the driver/amplifier/filter circuit 1.

The PLC control circuit 3 carries out a predetermined PLC control on the digital signal received from the AD converter portion of the AD/DA converter 2, transmits the processed signal to the EtherPHY 4. The PLC control circuit 3 also carries out a predetermined PLC control on the digital signal received from the EtherPHY 4 and transmits the processed signal to the DA converter portion of the AD/DA converter 2.

The EtherPHY 4 transmits the PLC data received from the PLC control circuit 3 to a LAN cable 9. It also transmits the PLC data received from a network device via the LAN cable 9 to the PLC control circuit 3.

There is provided a connector which allows physical connection to the LAN cable 9 onto the EtherPHY 4. The connection between the PLC terminal apparatus A and the network device is made through the LAN cable 9 in this embodiment, but this is not restrictive.

The disconnection detector 5 detects disconnection state of the network device connected to the LAN cable 9. The detection means include a means for detecting the link at the EtherPHY 4. The link is physically connected to the network device and is established when the network device exhibits electrical performance as specified in IEEE802. 3. Therefore, the link becomes disconnected when the network device is turned off or the LAN cable 9 is unplugged from the connector. Other detection means include a arrangement for detecting physical connection and disconnection by a switch, a sensor, or any of other elements which is installed in the connector portion for the LAN cable 9.

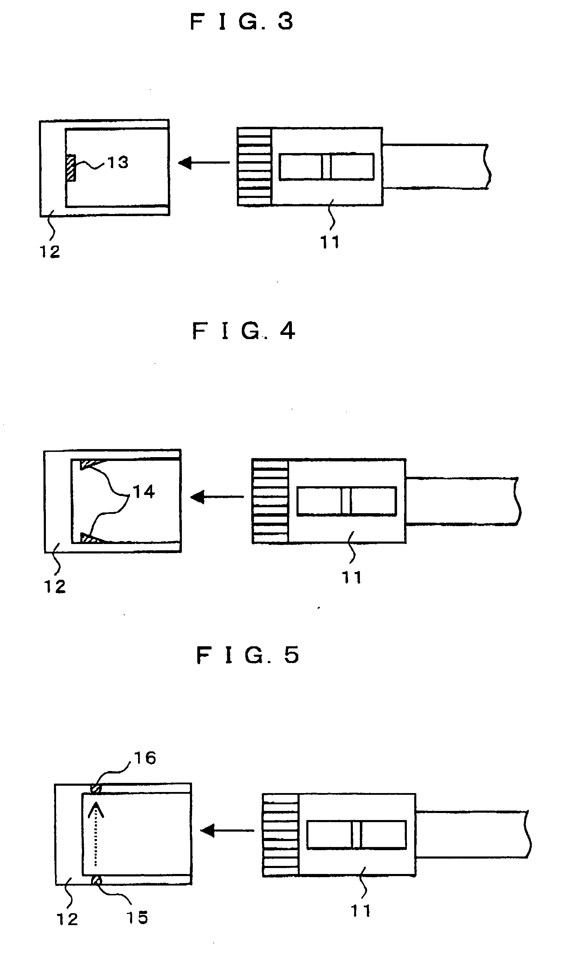

Fig.3, 4 and 5 respectively show examples of detection means in the Ether connectors.

In the case of the male connector 11 and female connector 12 of Fig. 3, a switch 13 is installed at the bottom of the recess of the female connector 12. The male connector 11 depresses the switch 13 when inserted into the female connector 12 and release the switch 13 when the male connector 11 is pulled out from the female connector 12. Thus the ON/OFF switching is performed.

In Fig4, a pair of switches are installed on the opposing walls in the recess of the female connector 12. The pair of switches 14 are depressed by the male connector 11 when the male connector 11 is inserted into the female connector 12, and the pair of switches 14 are released when the male connector 11 is pulled out from the female connector 12. Thus the ON/OFF switching is performed.

Fig. 5 shows a connector connection detector comprising a light-emitting element 15 and a light-receptive element 16. The light-receptive element 16 detects light from the light-emitting element 15 when the female connector 12 is not connected to the male connector 11. When the female connector 12 is connected to the male connector 11, the light from the light-emitting element 15 is interrupted by the male connector 11 and does not reach the light-receptive element 16. Thus the light is not detected by the light-receptive element 16.

Other detection means include an arrangement which involves a transmission of a packet requesting a response, such as the ARP packet in the Ethernet. If a response is returned on the packet transmission, a judgment is made that a connection is made to the network device which is in power-on state. If not, a judgment is made that the network device remains off or is disconnected. This arrangement is useful for detecting connection with network devices using the LAN cards on certain kinds of desktop PCs, in which power is kept supplied to the LAN cards, though the network devices stay; i.e., the link is ready though no communication is possible.

The users do not need to pay any special attention, because the transition to a power saving mode occurs automatically as soon as the LAN cable 9 is unplugged.

Once a disconnection state of a network device is detected by the disconnection detector 5, or a manual operation to a switch 6 is detected by the switch 6, a disconnection detection signal is generated and is transmitted to a state transition controller 7. The state transition controller 7 controls the supply of power , clock and other control signals to each internal circuit of the PLC terminal apparatus A and switches the internal circuits from a normal operation state to a dormant or the power-off state.

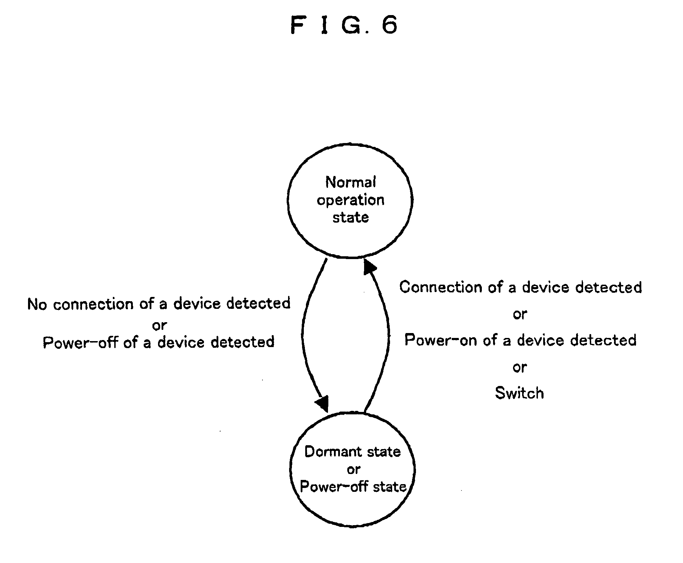

Fig. 6 is a state transition diagram showing the operation of the PLC terminal apparatus A in a first preferred embodiment of the present invention. The state transition of the PLC terminal apparatus A is triggered by the ON/OFF of the network device connected to the PLC terminal apparatus, the physical connection or disconnection of the LAN cable 9, the response to a transmitted packet or the input from the switch 6.

The "dormant state" in the state transition diagram indicates a state, in which at least one of the power supply and clock supply is stopped or reduced to be fed into at least one of the circuits consisting of the driver/amplifier/filter circuit 1, AD/DA converter 2, PLC controller circuit 3 and EtherPHY 4. Alternatively, the dormant state indicate a state in which at least one of the power and clock supplied by other control signals in each of the aforementioned internal circuit is stopped or reduced. The "power-off state" is a state in which power supply is stopped to all the internal circuits.

Waste of power consumption can be avoided, because the internal circuits of the PLC terminal apparatus turn to dormant states or the power-off state when a disconnection state is detected.

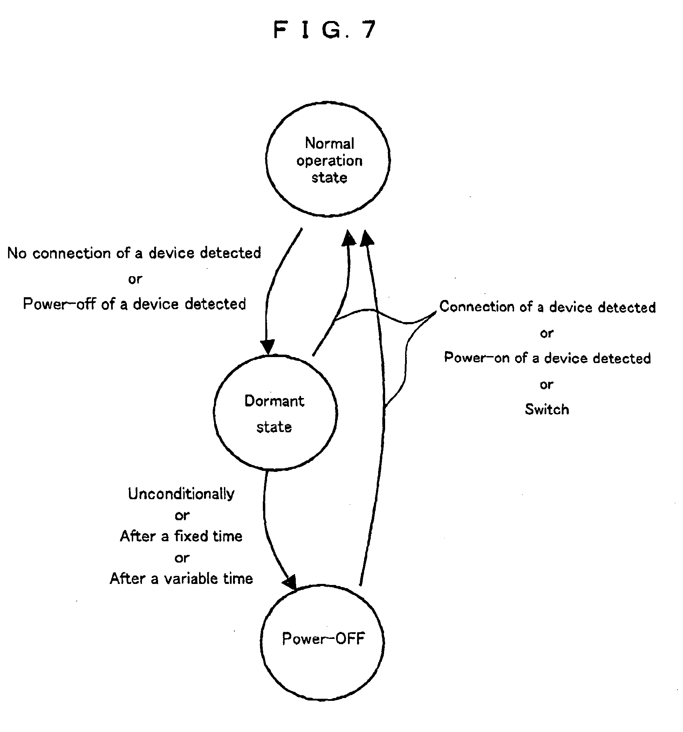

Fig 7 is a partial modification of the state transition diagram showing the operation of the PLC terminal apparatus A. The state transition of the PLC terminal apparatus A is triggered by the conditions described above, however, the normal operation state turn only to a dormant state. The dormant state continues temporarily, and the transitting to the power-off state occurs unconditionally, or after a fixed or variable amount of time has passed. In this configuration, the transitting to the power-off state occurs not immediately after the detection of a disconnection state, but after a predetermined time has passed subsequent to the transitting to the dormant state. This configuration allows more efficient restoration of normal operation because when the relation between the PLC terminal apparatus A and a network device changes from a disconnection state to a connection state, the restoration occurs from the dormant state, rather than from the power-off state.

### (Second preferred embodiments)

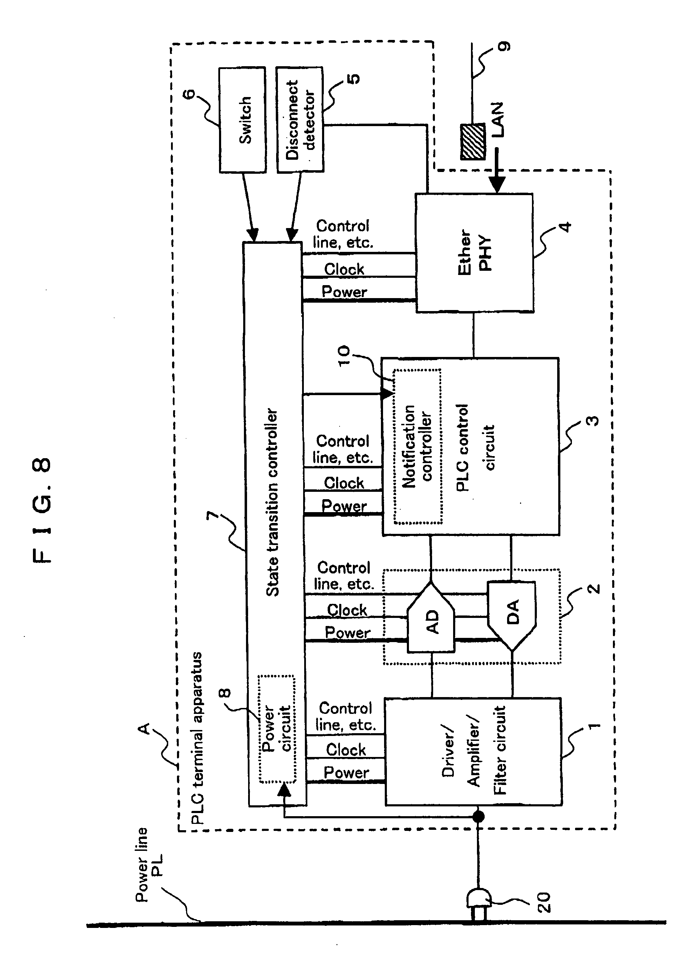

Fig.8 is a block diagram showing the configuration of the PLC terminal apparatus A in a second preferred embodiment of the present invention. The second embodiments are different from the first preferred embodiments in that a notification controller 10 is added.

Once a disconnection state of the network device connected to the PLC terminal apparatus A is detected by the disconnection detector 5, the notification controller 10 is launched via the state transition controller 7. The notification controller 10 generates a packet notifying that the PLC terminal apparatus is excluded from power line communication and sends the packet to the PLC network via the power line. The communication efficiency of the PLC network can be increased when the other PLC apparatuses receiving the notification remove the band reservations and carry out other processes to take some of the load off the PLC network.

The state transition controller 7 turn each internal circuit in the PLC terminal apparatus A to a dormant or power-off state, after the notification controller 10 completes notification that the PLC terminal apparatus is excluded from power line communication.

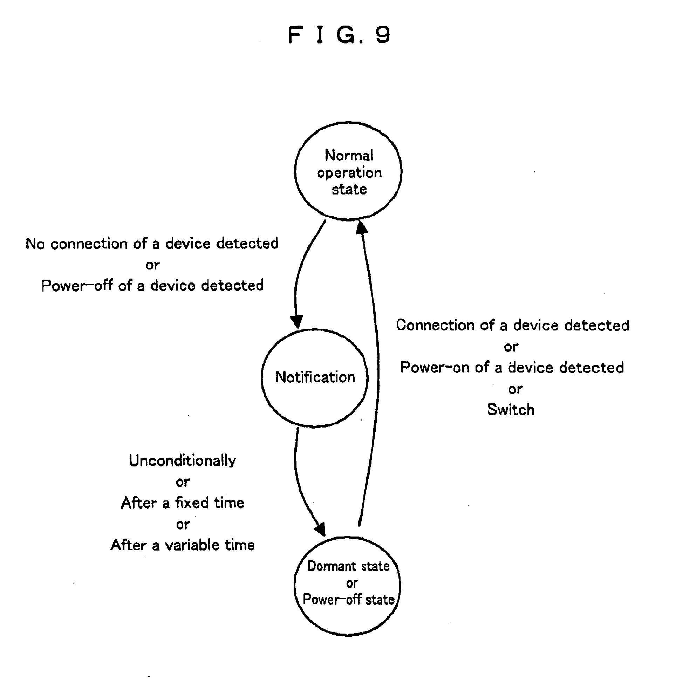

Fig. 9 is a state transition diagram showing the operation of the PLC terminal apparatus A in the second preferred embodiment of the present invention . As in the cases of the first preferred embodiments, the state transition of the PLC terminal apparatus is triggered by the ON/OFF of power, physical state of connections, response to a packet transmitted, and input to the switch 6 of a network device connected to the PLC terminal apparatus. It should be noted that the normal operation state turn only to the notification state. After the notification, the notification state turn to the dormant state or to the power-off state unconditionally, or after a fixed or a variable amount of time has passed.

Incidentally, in the process of transition from the dormant or the power-off state to the normal operation state, there is a notification state, in which a packet is transmitted to notify that the apparatus is going to participate with the PLC network (not shown) . The notification state is usually provided as an independent function performed after turning on the PLC terminal apparatus A. In reality, the notification of participation with the PLC network is made after the apparatus reaches a normal operation state.

In the second embodiment, the internal circuits do not turn to a dormant, or the power-off state as soon as a disconnection state is notified, but turn to a dormant, or the power-off state only after a predetermined time has passed subsequent to the notification. When the relation between the PLC terminal apparatus and a network device changes from a disconnection state to a connection state at a comparatively early time after the notification, the PLC terminal apparatus does not turn to the dormant or turn-off state. Therefore, this arrangement allows higher process efficiency than the arrangement in which the apparatus is transitted to dormant or turn-off state concurrently with the notification.

### (Third preferred embodiments)

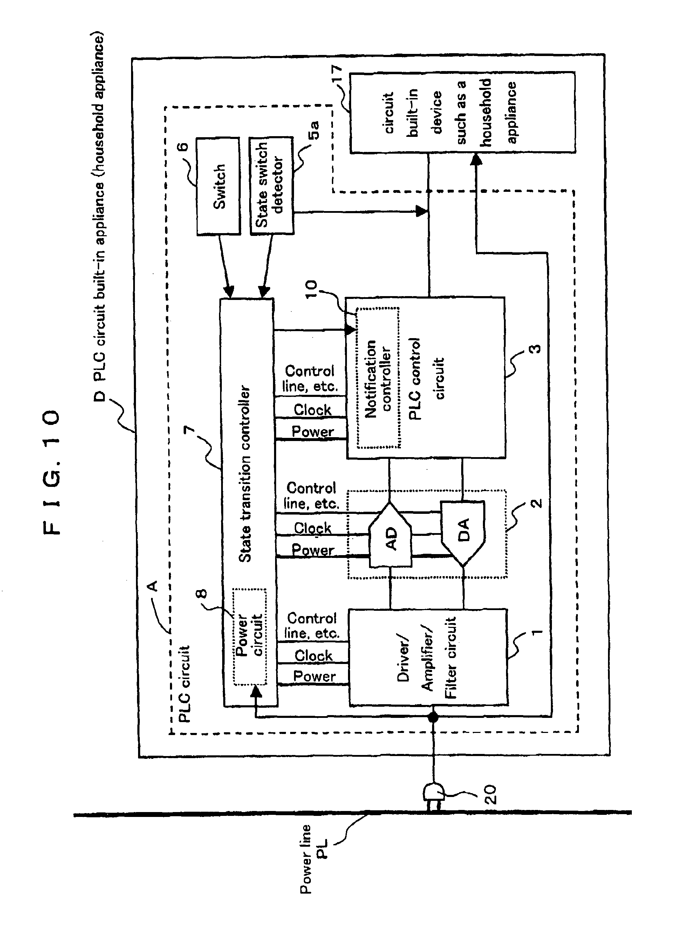

Fig. 10 is a block diagram showing the configuration of a PLC circuit built-in device such as a household appliance in a third preferred embodiment. In Fig. 10, reference numeral 17 is a circuit built-in device D such as a household appliance. The PLC circuit built-in device D comprises the circuit 17 and a PLC circuit A incorporated. Incidentally, the EtherPHY4 and LAN cable 9 as shown in Fig.8 are not provided in PLC circuit built-in device D, and, as a substitute for the disconnection detector 5, there is provided a state transition detector 5a which detects the switching from a normal operation state to an energy saving mode or a power-off state of the circuit 17.

Once the state detector 5a detect a switching of the circuit 17 from a normal operation state to an energy saving mode or a power-off state, the notification controller 10 is launched via the state transition controller 7. The notification controller 10 generates a packet notifying that the circuit 17 turns to an energy saving mode or a power-off state and is excluded from power line communication, and sends the packet to the PLC network via the power line. The communication efficiency of the PLC network can be increased when other PLC apparatuses receiving the notification remove the band reservations and carry out other processes to take some of the load off the PLC network.

The state transition controller 7 turns each circuit in the PLC circuit A to a dormant or power off state, after the notification controller 10 completes the notification that the PLC circuit A is excluded from the PLC network.

In the third embodiments, a considerable amount of cost is saved compared to the second embodiments described above, because no interface, such as EtherPHY4 and LAN cable 9, is required.

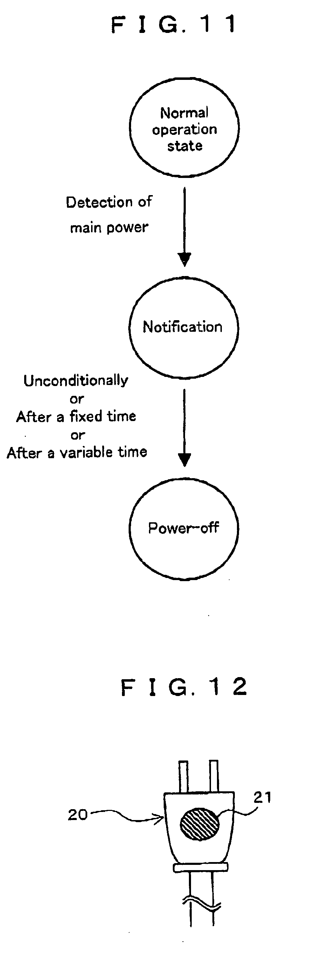

Fig. 11 is a state transition diagram showing the operation of the PLC circuit A in the third preferred embodiment of the present invention. The PLC circuit built-in device D, such as a household appliance, is turned off by shutting off the power supply switch. There is a notification state before a transition to the power-off state, and the transition to the power-off state occurs unconditionally, or after a fixed or a variable time has passed.

After turning to the notification state, the PLC circuit A transmits a packet notifying that the apparatus will be excluded from power line communication to the PLC network via the power line PL, and then to the power-off state.

### (Fourth preferred embodiments)

Fig. 12, 13 and 14 respectively show examples of power cord plugs used for a PLC terminal apparatus of a fourth preferred embodiment.

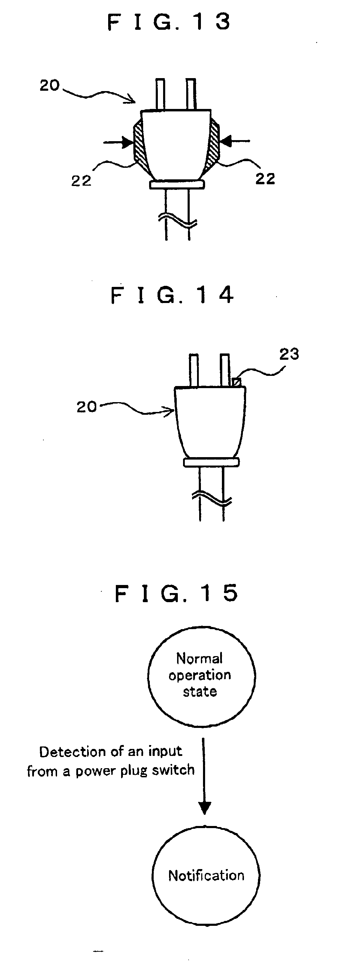

In Fig. 12, a push switch 21 is provided on one of the flat surfaces of a power cord plug 20 . The switch is depressed when the power plug 20 is operated. In Fig. 13, a pair of push switches are installed on opposite sides of the power plug 20.

The switches 21 and 22 are depressed without a user's knowing when a user pulls out the power plug 20. The state transition controller 7 controls the notification controller 10 by generating a disconnection prior-detection signal based on switch input. The notification controller 10 generates a packet notifying that the PLC terminal apparatus is excluded from power line communication and sends the packet to the PLC network via the power line.

In Fig. 14, a switch 23 is installed at the end surface of the power plug 20. When the power plug 20 is unplugged from an outlet on a wall or a tap, the switch 23, which has been depressed till then, is released to turn, for example, from an ON state to an OFF state. Based on the switch input, the state transition controller 7 controls the notification controller 10, generates a packet notifying that the PLC terminal apparatus is excluded from power line communication and then sends the packet to the PLC network via the power line. This operation is performed without the user's knowing.

The packet transmission by the notification controller 10 is configured to be completed in a short period of time during which the power plug 20 is unplugged and completely separated from the outlet. The communication efficiency of the PLC network can be increased when other PLC terminal apparatuses receiving the notification remove the band reservations and carry out other processes to take some of the load off the PLC network.

Fig. 15 is a state transition diagram showing the operation of the PLC terminal apparatus A in the fourth preferred embodiment of the present invention. By detecting the user s action of unplugging in advance, the notification of the exclusion of the PLC terminal apparatus from the PLC can be made before the power plug 20 is completely unplugged from the outlet.

### (Fifth preferred embodiments)

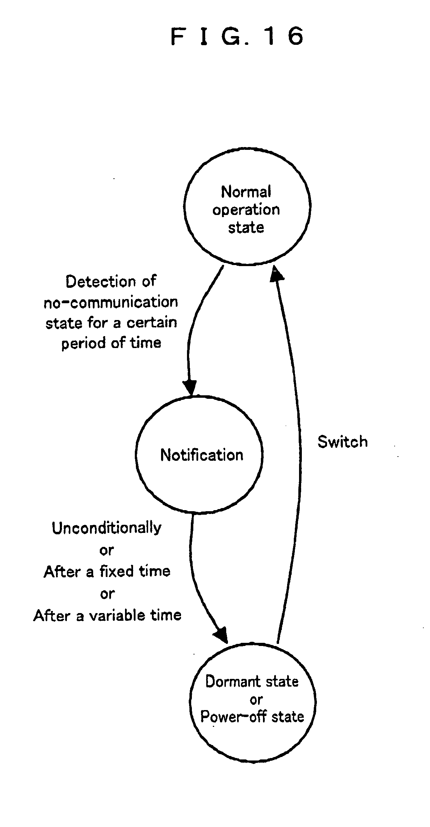

Fig. 16 is a state transition diagram showing the operation of the PLC terminal apparatus A in a fifth preferred embodiment of the present invention. The PLC terminal apparatus further comprises a timer or a counter, which is used to detect a no-connection state. But, no dedicated timer or counter is required as long as it can detect the no-communication state continuing for a certain variable, or a fixed amount of time. Thus, any available timers or counters for other purposes can be used for this purpose. After a no-communication state continuing for a certain variable, or fixed amount of time is detected by the timer or by the counter, the PCL terminal apparatus turn to a dormant or to the power-off state. The transition to a notification state occurs before the power-off, and then the transition to the power-off state occurs unconditionally, or, after a fixed, or a variable amount of time has passed.

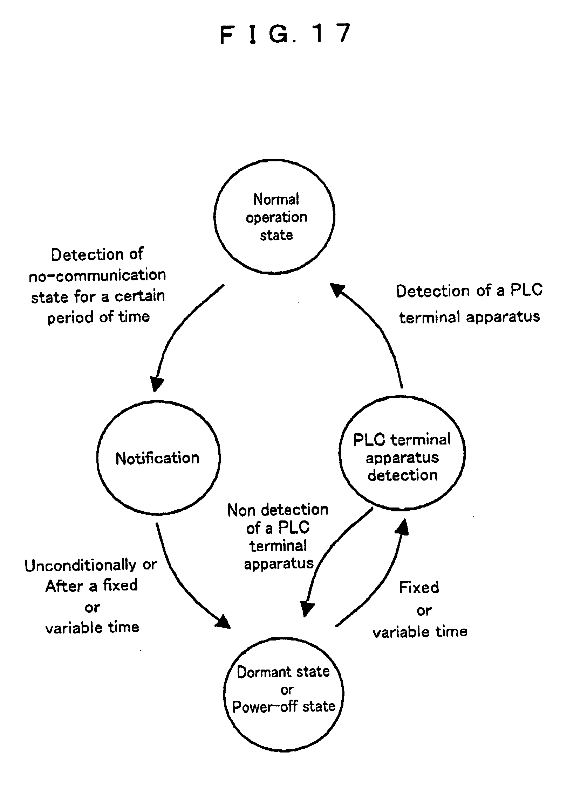

Fig. 17 is another illustrative drawing explaining operational transitions of the PLC terminal apparatus A in the fifth preferred embodiment. In Fig. 17, the state transition occurs based on the same concept as described above, and there are added a means for launching the apparatus at intervals of a certain fixed or variable time, a means of checking the communication on the PLC network and a means of turning a state back to a dormant or the power-off state in the case of no communication. The PLC terminal apparatus is launched at intervals of a fixed or variable time after turning to the dormant or the power-off state to check communication status on the PLC network. This arrangement allows detections of other PLC terminal apparatuses newly connected to the PLC network and therefore saves power while maintaining easiness of mutual connections among the PLC terminal apparatuses A.

Incidentally, although the PLC terminal apparatuses are described as adaptor type terminals disposed between a power line PL and a network device in the above embodiments, they are not limited to adaptor type terminals. Other type of PLC terminal apparatuses include, but are not limited to, apparatuses embedded in outlets.

While the invention has been described and illustrated in detail, it is to be clearly understood that this is intended by way of illustration and example only and is not to be taken by way of limitation, the spirit and scope of this invention being limited only by the terms of the following claims.

## Claims

1. A power line communication terminal apparatus disposed between a network device and a power line forming of a power line network, the power line communication terminal apparatus comprising:
a disconnection detector detecting a disconnection state with the network device; and
a state transition controller transitting internal circuits to a dormant state (energy saving mode), or to the power-off state when the result of the disconnection detector shows a disconnection state.

2. The power line communication terminal apparatus of claim 1, wherein;
the disconnection detector is configured to detect a disconnection state through a switch or a sensor installed in a connector portion with a connection cable of the network device.

3. The power line communication terminal apparatus of claim 1, wherein;
the state transition controller is configured to transit the internal circuits to a dormant state (power saving mode) temporarily when the result of the disconnection detector shows a disconnection state, and subsequently transit the internal circuits to the power-off state after a predetermined time has passed.

4. A power line communication terminal apparatus disposed between a network device and a power line forming a part of a power line network, the power line communication terminal apparatus comprising:
a disconnection detector detecting a disconnection state with the network device; and
a notification controller notifying the disconnection state with the power line communication network to the other power line communication devices connected to the power line communication network when the result of the disconnection detector shows a disconnection state.

5. The power line communication terminal apparatus of claim 4, further comprising:
a state transition controller transitting internal circuits to a dormant state (energy saving mode), or to the power-off state, after the notification of a disconnection state is completed by the notification controller.

6. The power line communication terminal apparatus of claim 5, wherein;
the state transition controller is configured to transit the internal circuits to a dormant state (energy saving mode), or to the power-off state, after a predetermined time has passed subsequent to the notification of a disconnection state by the notification controller, when the result of the disconnection detector shows a disconnection state.

7. A power line communication terminal apparatus disposed between a network device and a power line forming a power line network, the power line communication terminal apparatus comprising:
a notification controller operating with turning-off of a power switch and notifying a disconnection state with the power line communication network to other power line communication devices connected to the power line communication network.

8. A power line communication terminal apparatus disposed between a network device and a power line forming a power line network, the power line communication terminal apparatus comprising:
a switch installed on a power plug, wherein the power plug being electrically connected to, or disconnected from, the power line by a physical contact to, or a separation from, the power line; the switch turning on or off before the power plug completing the physical contact to, or separation from, the power line; and a disconnection prior-detection signal being generated prior to the power plug being completely disconnected from the power line, wherein the generation of the signal being triggered by the switch detecting a disconnection from the power line communication network; and
a notification controller notifying the disconnection state with the power line communication network to the other power line communication devices connected to the power line communication network based on the input of the disconnection prior-detection signal by the switch.

9. A power line communication terminal apparatus disposed between a network device and a power line forming a power line network, the power line communication terminal apparatus comprising:
a no-connection state detector detecting a no-connection state, or a communication-incapable state, even if connected, of other communication-capable network devices on the power line communication network; and
a state transition controller transitting internal circuits to a dormant state (energy saving mode), or to the power-off state after the elapse of a predetermined time when the result of the no-connection state detector shows a no-connection state.

10. A power line communication terminal apparatus of claim 9, wherein;
the state transition controller transites the internal circuits to a dormant state (energy saving mode) or to the power-off state, and subsequently switches internal circuits to a normal operation state after a predetermined time has passed;
the no-connection state detector detects the communication status on the power line network when the state transition controller switches to the normal operation state; and
the state transition controller continues the normal operation state when there exists data being communicated on the power line network, and switches to the dormant of the power-off state when there exists no data being communicated on the power line network.

11. A power line communication terminal apparatus of claim 1, comprising:
a means for detecting a connection with a network device, independently controlling supplies of power and/or clock to each circuit of power line communication terminals, or control signals of of power supply and/or clock, and for turning the dormant state or the power-off state to a normal operation state.

12. A power line communication circuit built into a household appliance forming a power line communication network through a connection with a power line, the power line communication circuit comprising:
a detection circuit detecting the switching of other circuits. internal to the household appliance from a normal operation state to a dormant state (energy saving mode), or to the power-off state;
a notification circuit notifying a disconnection state with the power line communication network to the other power line communication devices connected to the power line communication network when the detection circuit detecting the switching of the other circuits to the dormant state (energy saving mode), or to the power-off state.

13. the power line communication circuit of claim 12, further comprising:
a state control circuit, after the elapse of predetermined time subsequent to the notification of the disconnection state with the power line communication network by the notification circuit, switching the state to the dormant state (energy saving mode), or to the power-off state by controlling the power supply, clock supply to the other circuits or by controlling the clock control signal.

14. The power line communication circuit of claim 13, further comprising:
a means for switching to a normal operation state from the dormant state (energy saving mode), or from the power-off state, by independently controlling supplies of power and/or clock to
each circuit of the power line circuits, or control signals of power supply and/or clock when the detection circuit detects the switching to a power-on state of the other circuits internal to the household appliance.
